# EUROPEAN PATENT APPLICATION

(11) **EP 2 059 091 A2**
(43) Date of publication of application: **13.05.2009**
(21) Application number: 08163583.1
(22) Date of filing: 03.09.2008
(51) Int. Cl.: H05B 6/06

(54) **Apparatus and method for induction heating**

(30) Priority: 12.11.2007 KR 20070114836
(71) Applicant: Samsung Electronics Co., Ltd., Suwon-si Gyeonggi-do (KR)
(72) Inventor: Lee, Sung Ho, Gyeonggi-do (KR); Hong, Seok Weon, Gyeonggi-do (KR); Jang, Seong Deog, Gyeonggi-do (KR); Kim, Dae Rae, Gyeonggi-do (KR); Lee, Se Min, Gyeonggi-do (KR)
(74) Representative: Grünecker, Kinkeldey, Stockmair & Schwanhäusser Anwaltssozietät

(57) **Abstract**

Disclosed is an apparatus and method for induction heating. The induction heating cooker determines an existence of a vessel and determines material and a bottom size of the vessel by using resonance voltage, which is applied to a heating coil for heating the vessel, so that a proper control operation is performed corresponding to the existence of the vessel, the material and the bottom size of the vessel.

## Description

### BACKGROUND

### 1. Field

The present invention relates to an induction heating cooker. More particularly, the present invention relates to an induction heating cooker capable of detecting a vessel existing in the induction heating cooker.

### 2. Description of the Related Art

In general, an induction heating cooker is an apparatus that applies radio frequency current to a heating coil to generate a strong radio frequency magnetic field on the heating coil and generate an eddy current on a vessel, which is magnetically coupled with the heating coil, through the magnetic field such that the vessel is heated due to the joules of heat generated by the eddy current, thereby cooking food within the vessel.

An inverter of the induction heating cooker allows radio frequency currents to flow through the heating coil. In general, the inverter drives a switching device including an IGBT (Insulated Gate Bipolar Transistor) to apply radio frequency current to the heating coil, so that the radio frequency magnetic field is generated on the heating coil.

A switching device for switching input power is directly connected to the inverter, and one side of a heating coil that is driven by a switching voltage of the switching device is connected to a connection point of the switching device directly connected to the inverter. In addition, the other side of the heating coil is connected to a resonance condenser.

A driving operation of the switching devices is performed by a driving unit and the switching devices are alternately operated under the control of a switching time output from the driving unit, thereby applying the radio frequency voltage to the heating coil. Since a turn on/off time of the switching device applied from the driving unit is controlled in such a manner that the time is gradually compensated, the voltage provided to the heating coil is gradually compensated from a low voltage to a high voltage.

In an operational process of the induction heating cooker, if the driving operation of a product starts after power is input to the product, a control unit that controls the operation of the product outputs an on-time control signal to drive the driving unit. The on-time signal is applied to the switching device through the driving unit. As the switching device is operated by the on-time control signal, a voltage is applied to the heating coil. If the voltage is applied to the heating coil, an eddy current is generated between the heating coil and a vessel including magnetic material, so that the vessel is heated.

The control unit consecutively outputs signals for compensating for an on-time output level of the switching device after the vessel is heated. As the signal is applied to the driving unit, the switching voltage of the switching device is changed into a high voltage, so that high voltage is applied to the heating coil.

In this regard, in order for the heating coil to generate high power, values of the heating coil and the resonance condenser are set to a high level. Accordingly, when the voltage applied to the heating coil reaches a high voltage by maximally compensating for the output from a low voltage, a resonance voltage determined by the heating coil and the resonance condenser has a high level.

At this time, if the vessel is removed, the resonance voltage highly set corresponding to the high level of the heating coil and the resonance condenser is not consumed because it cannot be conveyed to the vessel. The controller, which fails to detect that the vessel is removed, continuously extends the on-time of the switching device, so that the resonant voltage is continuously increased.

The resonance voltage continuously increased as described above may damage peripheral circuits as well as the switching device. In addition, the driving unit may be subject to the high resonance voltage even when the vessel is removed, so that circuit devices thereof may be broken.

### SUMMARY

Accordingly, it is an aspect of embodiments of the present invention to provide an induction heating cooker and method of induction heating capable of determining if a vessel exists in the induction heating cooker and determining a material and a bottom size of the vessel to properly perform a control operation.

Additional aspects and/or advantages will be set forth in part in the description which follows and, in part, will be apparent from the description, or may be learned by practice of the invention.

The foregoing and and/or other aspects of embodiments of the present invention are achieved by providing an induction heating cooker comprising a rectifying unit that rectifies input AC power into DC power, an inverter unit that provides resonance voltage by switching the DC power, a heating coil that receives the resonance voltage and induces an eddy current to a vessel such that the vessel is heated, a detecting unit that detects the resonance voltage provided to the heating coil, and a control unit that determines if the vessel exists based on the detected resonance voltage.

According to an aspect of embodiments of the present invention, the control unit determines that the vessel exists if the resonance voltage is detected within a predetermined time.

According to an aspect of embodiments of the present invention, the control unit determines that the vessel exists if the resonance voltage is detected within the predetermined time after the inverter unit starts to operate.

According to an aspect of embodiments of the present invention, upon a determination that the vessel does not exist, the control unit stops the operation of the inverter unit.

According to an aspect of embodiments of the present invention, upon a determination that the vessel exists, the control unit determines if the vessel includes magnetic material or non-magnetic material based on a period of time for detecting the resonance voltage.

According to an aspect of embodiments of the present invention, if the resonance voltage is detected within a first predetermined time after the inverter unit starts to operate, the control unit determines that the vessel includes the magnetic material.

According to an aspect of embodiments of the present invention, if the resonance voltage is detected after a first predetermined time has lapsed from a start of operation of the inverter unit, the control unit determines that the vessel includes the non-magnetic material.

According to an aspect of embodiments of the present invention, upon a determination that the vessel includes the non-magnetic material, the control unit stops an operation of the inverter.

It is another aspect of embodiments of the present invention to provide an induction heating cooker comprising a rectifying unit that rectifies inputAC power into DC power, a plurality of inverter units that provide resonance voltage by switching the DC power, a plurality of heating coils that receive the resonance voltage from the plural inverter units to induce eddy current to a vessel such that the vessel is heated and the heating coils are independently disposed from each other in a concentric circle, a plurality of detecting units that detect the resonance voltage provided to the plural heating coils, and a control unit that determines if the vessel heated by the heating coil exists based on the detected resonance voltage and determines a bottom size of the vessel.

According to an aspect of embodiments of the present invention, if the resonance voltage is detected within a predetermined time after the corresponding inverter unit starts to operate, the control unit determines that the vessel heated by the corresponding heating coil exists.

According to an aspect of embodiments of the present invention, the control unit stops an operation of the inverter unit which does not correspond to the bottom size of the vessel.

According to an aspect of embodiments of the present invention, upon a determination that the vessel heated by the corresponding heating coil exists, if the resonance voltage is detected within a first predetermined time after the inverter unit starts to operate, the control unit determines that the vessel includes magnetic material.

According to an aspect of embodiments of the present invention, upon a determination that the vessel heated by the corresponding heating coil exists, if the resonance voltage is detected after a first predetermined time has lapsed from a start of operation of the inverter unit, the control unit determines that the vessel includes non-magnetic material.

### BRIEF DESCRIPTION OF THE DRAWINGS

These and/or other aspects and advantages will become apparent and more readily appreciated from the following description of the embodiments, taken in conjunction with the accompanying drawings of which:
FIG. 1 is a schematic block diagram illustrating an induction heating cooker according to a first embodiment of the prevent invention;
FIG. 2 illustrates a current route in a state in which a switching device (S1) is turned on and a switching device (S2) is shut off in FIG. 1;
FIG. 3 illustrates a current route in a state in which a switching device (S2) is turned on and a switching device (S1) is shut off in FIG. 1;
FIG. 4 is a graphically illustrates a difference in waveforms of resonance voltages according to the existence of a vessel in FIG 1;
FIG. 5 graphically illustrates a difference in waveforms of resonance voltages when a vessel is made from a magnetic material and a non-magnetic material in FIG.1;
FIG. 6 illustrates a heating coil used for an induction heating cooker according to an embodiment of the present invention;
FIG. 7 is a schematic block diagram illustrating the induction heating cooker according to an embodiment of the present invention;
FIGS. 8A to 8C graphically illustrate waveforms of resonance voltages in a detecting unit according to a bottom size of a vessel shown in FIG. 7; and
FIG. 9 is a flowchart illustrating a procedure of determining the bottom size of the vessel in the induction heating cooker according to an embodiment of the present invention.

### DETAILED DESCRIPTION OF THE EMBODIMENTS

Reference will now be made in detail to the embodiments, examples of which are illustrated in the accompanying drawings, wherein like reference numerals refer to the like elements throughout. The embodiments are described below to explain the present invention by referring to the figures.

Hereinafter, a preferred embodiment of the present invention will be described in detail with reference to the accompanying drawings.

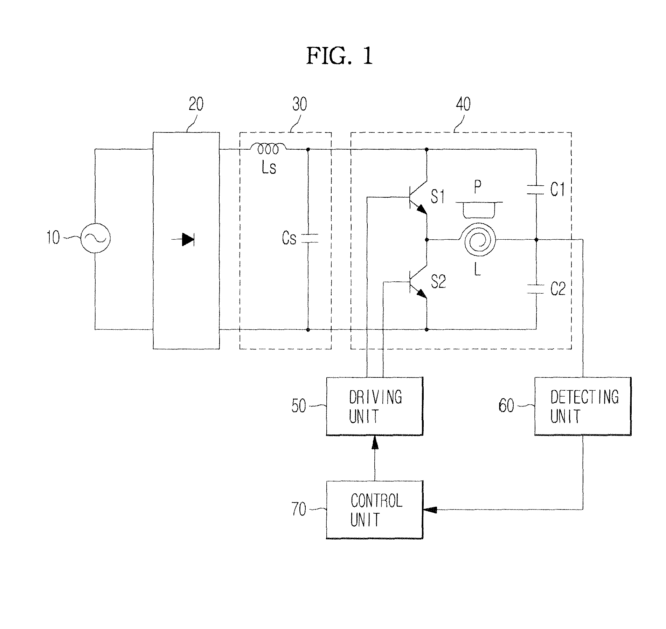

FIG. 1 is a schematic block diagram representing an induction heating cooker according to a first embodiment of the present invention. As shown in FIG. 1, the induction heating cooker comprises a rectifying unit 20, a smoothing unit 30, an inverter unit 40, a driving unit 50, a detecting unit 60 and a control unit 70.

The rectifying unit 20 rectifies input AC power 10 and outputs rectified fluctuating voltage.

The smoothing unit 30 smoothes the fluctuating voltage provided from the rectifying unit 20 and outputs a constant direct voltage which is obtained through the smoothing.

The inverter unit 40 is provided with switching devices S1 and S2, which provide resonance voltage by switching the direct voltage provided from the smoothing unit 30 depending on a switching control signal of the driving unit 50, and resonance condensers C1 and C2 that are serially connected between a positive power terminal and a negative power terminal to successively resonate together with a heating coil L according to the input voltage.

The heating coil L is connected between the switching devices S1 and S2 and induces an eddy current to a vessel P by using the resonance voltage input from the rectifying unit 20, thereby heating the vessel P.

If the switching device S1 is turned on and the switching device S2 is shut off, the heating coil L and the resonance condenser C2 form a resonance circuit in series. In addition, if the switching device S2 is turned on and the switching device S1 is shut off, the heating coil L and the resonance condenser C1 form a resonance circuit in series.

The driving unit 50 switches the switching devices S1 and S2 of the inverter unit 40 according to the control signal of the control unit 70.

The detecting unit 60 is connected to a connection point between the resonance condenser C1 and the resonance condenser C2 to detect the resonance voltage provided to the heating coil L.

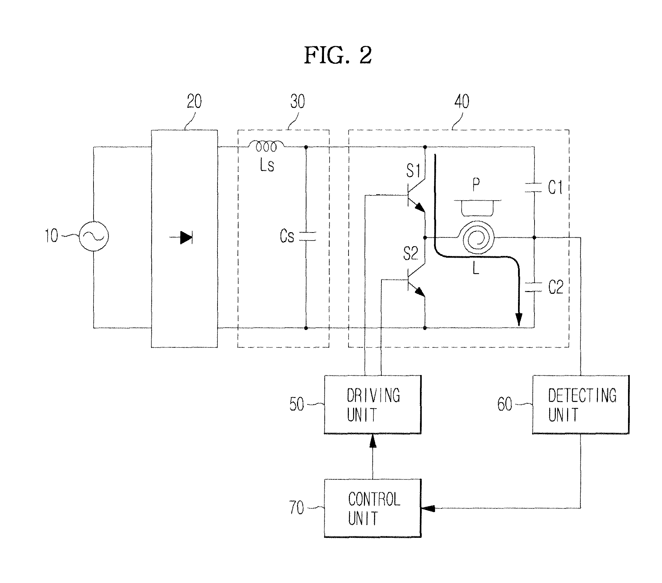

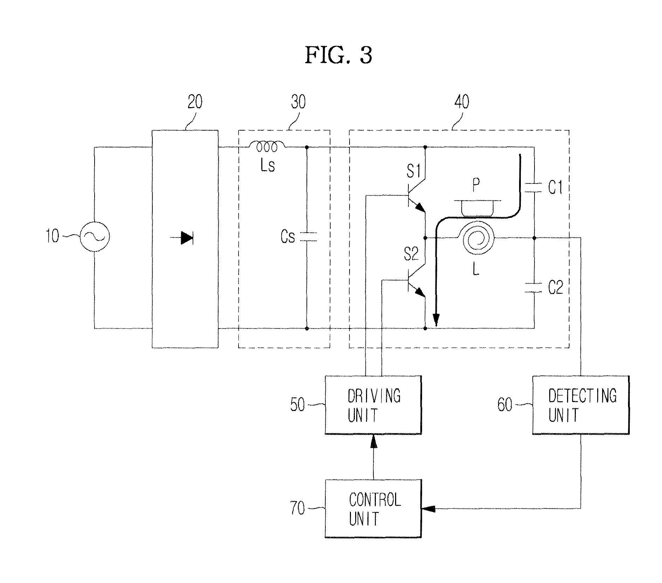

The control unit 70 performs a control operation. If a cooking command is input, the control unit 70 alternately generates the switching control signal to operate one of the switching devices S1 and S2 through the driving unit 50. For instance, as shown in FIG. 2, if the switching device S1 is turned on and the switching device S2 is shut off, a circuit including the switching device S1, the heating coil L and the resonance condenser C2 is formed. In addition, as shown in FIG. 3, if the switching device S2 is turned on and the switching device S1 is shut off, a circuit including the resonance condenser C1, the heating coil L and the switching device C2 is formed such that the resonance voltage is provided to the heating coil L. In this case, the heating coil L and the resonance condensers C1 and C2 successively represent a resonant state, so that high resonance current flows through the heating coil L.

A radio frequency magnetic field is generated from the heating coil L by the resonance current and eddy current is induced to the vessel P due to an electromagnetic induction based on the radio frequency magnetic filed, so that the vessel P is heated, thereby cooking food contained in the vessel P.

Meanwhile, as described above, although there is no problem if the vessel P is placed above the heating coil L, if the vessel P does not exist or is removed during the cooking operation, devices in the inverter unit 40 may be damaged. Accordingly, an operation of inverter unit 40 must be stopped by automatically detecting the existence of the vessel P such that the devices in the inverter unit 40 are prevented from being damaged.

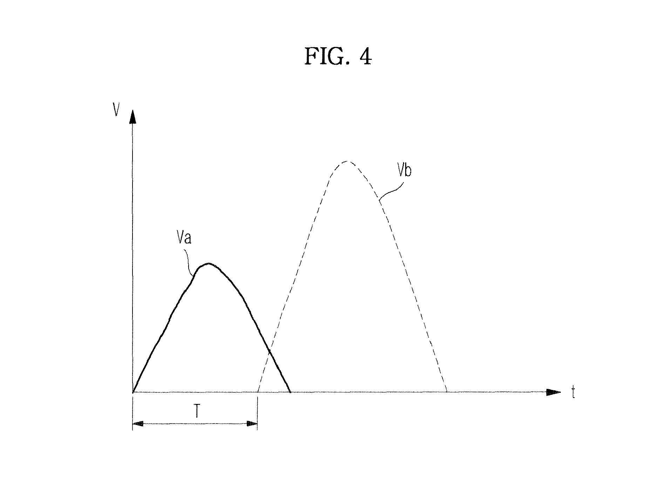

To this end, according to the first embodiment of the present invention, the control unit 70 operates the inverter unit 40 and detects the resonance voltage provided to the heating coil L through the detecting unit 60 and then determines the existence of the vessel P using the detected resonance voltage. That is, as shown in FIG. 4, if the vessel P exists above the heating coil L, the resonance voltage is detected within a predetermined time T as represented by the waveform Va. However, if the vessel P does not exist, the resonance voltage is detected after the predetermined time T has lapsed as represented by the waveform Vb. That is, the phase of the resonance voltage detected when the vessel P does not exist falls behind the phase of the resonance voltage detected when the vessel P exists. In addition to a difference in the phases of the respective resonance voltages, the resonance voltage detected when the vessel P does not exist is greater than the resonance voltage detected when the vessel P exists. Accordingly, the control unit 70 determines that the vessel P exists if the resonance voltage is detected within the predetermined time T and the vessel P does not exist if the resonance voltage is not detected within the predetermined time T.

The control unit 70 normally operates the inverter unit 40 if the vessel P exists, and stops the operation of the inverter unit 40 if the vessel P does not exist, so that the inverter unit 40 is prevented from being damaged.

Meanwhile, the radio frequency current, which is applied to the heating coil L to heat the vessel P made from a magnetic material, such as iron, must be different from the radio frequency current applied to the heating coil L to heat the vessel P made from a non-magnetic material, such as aluminum. That is, since the vessel P including the magnetic material has high heating efficiency, the vessel P can be heated even if relatively low-radio frequency current is applied to the heating coil L. However, since the vessel P including non-magnetic material has low heating efficiency, a relatively high radio frequency must be applied to the heating coil L. Accordingly, if the vessel P includes non-magnetic material, an auxiliary resonant circuit is additionally provided. The auxiliary resonant circuit is selectively operated to apply relatively high radio frequency current to the heating coil L.

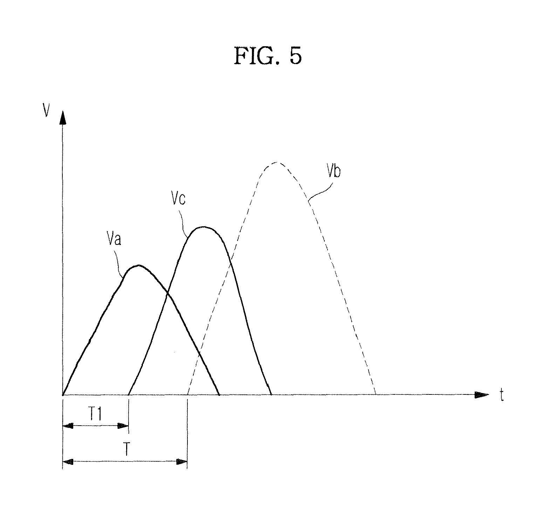

As shown in FIG. 5, the resonance voltage is detected within a predetermined time T and also detected within a shorter predetermined time T1, as represented by a waveform Va; thus the material of the vessel P is determined to be magnetic. When resonance voltage is detected within a predetermined time T but not detected after the shorter predetermined time T1 has lapsed, as represented by a waveform Vc, the material of the vessel P is determined to be non-magnetic. The resonance voltage detected when the vessel P includes non-magnetic material Vc, is greater than the resonance voltage detected when the vessel P includes magnetic material Va, but is smaller than the resonance voltage detected when the vessel P does not exist Vb.

Hereinafter, an induction heating cooker according to a second embodiment of the present invention will be described.

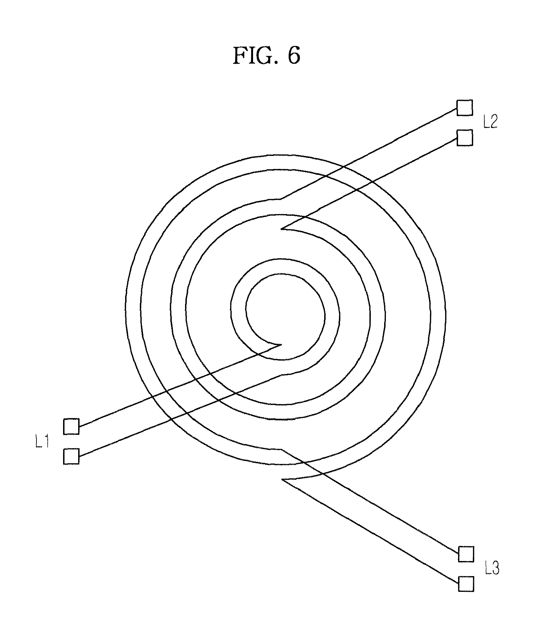

As shown in FIG. 6, in the induction heating cooker according to the second embodiment of the present invention, a heating coil is formed with a plurality of heating coil sections L1, L2 and L3 that are individually disposed along the same concentric circle and are independently operated.

Accordingly, the induction heating cooker according to the second embodiment of the present invention is provided with the multi-heating coil and adopts the procedure for determining the existence of the vessel P described above, so that the bottom size of a vessel P can be determined, thereby automatically performing a control operation according to the bottom size of the vessel P.

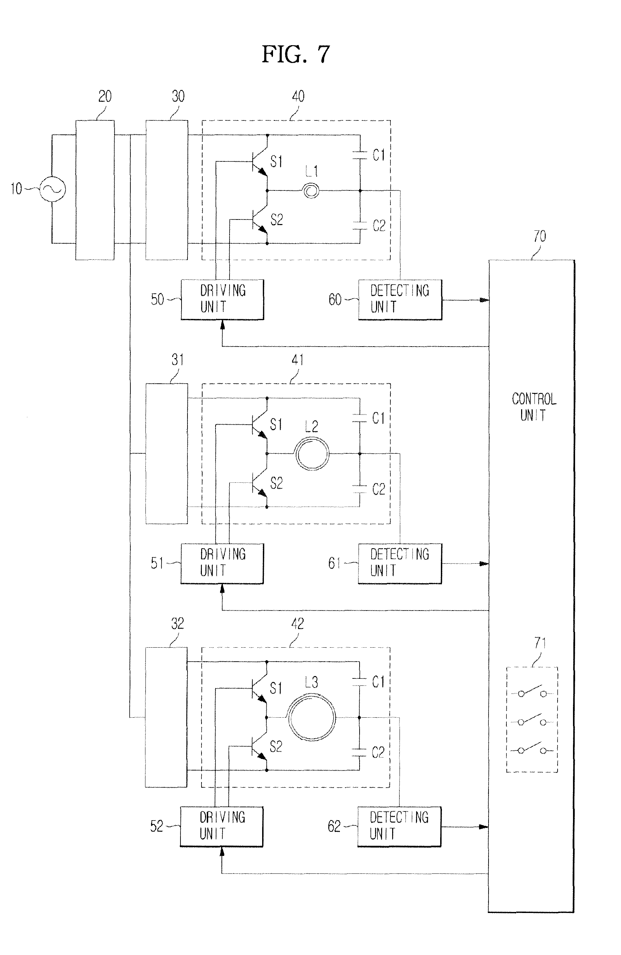

As shown in FIG. 7, the induction heating cooker according to the second embodiment of the present invention comprises one rectifying unit 20, three smoothing units 30, 31 and 32, three inverter units 40, 41 and 42, three driving units 50, 51 and 52, three detecting units 60, 61 and 62, and one control unit 70.

The smoothing units 30, 31 and 32, the inverter units 40, 41 and 42, the driving units 50, 51 and 52, and the detecting units 60, 61 and 62 have structures identical to those shown in FIG. 1 such that they correspond to the three heating coil sections L1, L2 and L3 shown in FIG. 6, respectively.

For example, the smoothing unit 30, the inverter unit 40, the driving unit 50 and the detecting unit 60 correspond to a first heating coil L1 having the smallest diameter.

In addition, the smoothing unit 31, the inverter unit 41, the driving unit 51 and the detecting unit 61 correspond to a second heating coil L2 having a medium diameter.

In addition, the smoothing unit 32, the inverter unit 42, the driving unit 52 and the detecting unit 62 correspond to a third heating coil L3 having the largest diameter.

In addition, the control unit 70 receives the resonance voltage, which is provided to the corresponding heating coil through the detecting units 60, 61 and 62, and independently operates the three driving units 50, 51 and 52 through a switching unit 71.

The control unit 70 operates the inverter units 40, 41 and 42 through the driving units 50, 51 and 52, detects the resonance voltage, which is provided to the heating coils L1, L2 and L3 through the detecting units 60, 61 and 62, and then judges if the vessel P exists above the heating coils L1, L2 and L3 using the detected resonance voltage.

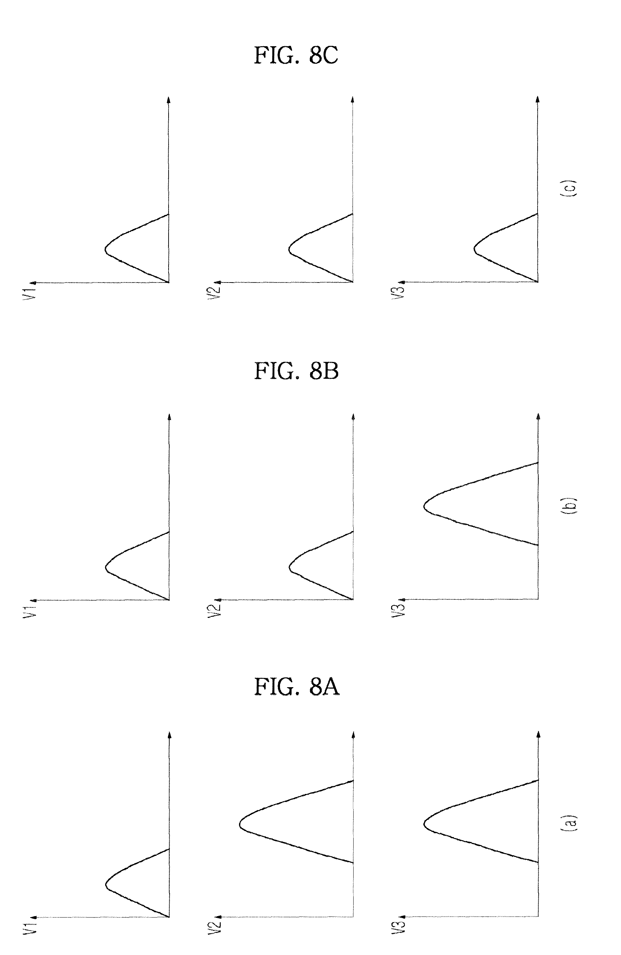

That is, as shown in FIG. 8A, if the vessel P has a small bottom size so that the vessel P is disposed above the first heating coil L1, a first resonance voltage V1 is detected within a predetermined time T, so that the vessel P is determined to have a bottom size corresponding to a size of the first heating coil L1.

In addition, as shown in FIG. 8B, if the vessel P has a larger bottom size so that the vessel P is disposed above the first heating coil L1 and the second heating coil L2, a second resonance voltage V2 is detected in addition to the first resonance voltage V1 within the predetermined time T, so that the vessel P is determined to have a bottom size corresponding to a size of the second heating coil L2.

In addition, as shown in FIG. 8C, if the vessel P has the largest bottom size so that the vessel P is disposed above the first heating coil L1, the second heating coil L2 and the third heating coil L3, a third resonance voltage V3 is detected in addition to the first and second resonance voltages V1 and V2 within the predetermined time T, so that the vessel P is determined to have a bottom size corresponding to a size of the third heating coil L3.

In this case, the control unit 70 selectively controls the inverter unit 40, which corresponds to the bottom size of the vessel P, through the switching unit 71.

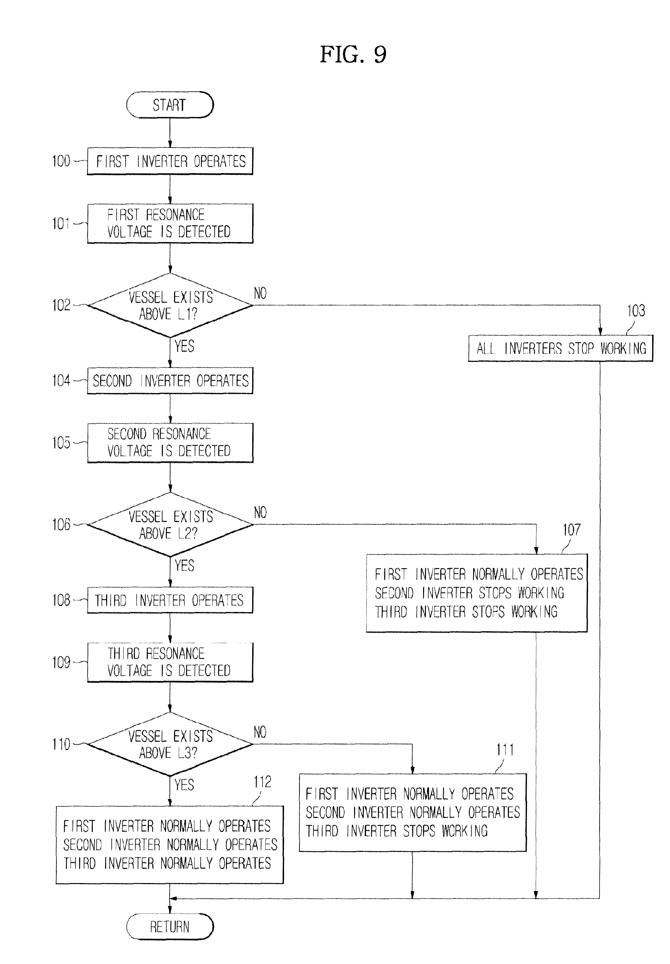

Referring now to FIGS. 7 and 9, in more detail, as shown in FIG. 9, in step 100, the control unit 70 only operates the first inverter unit 40 through the switching unit 71 to provide the first heating coil L1 with the first resonance voltage V1.

In step 101, the first resonance voltage V1 is detected through the first detecting unit 60. In step 102, it is determined if the vessel exits above the first heating coil L1 based on the first resonance voltage V1. That is, if the first resonance voltage V1 is detected within a predetermined time T, it is determined that the vessel exits above the first heating coil L1. However, if the first resonance voltage V1 is not detected within the predetermined time T, it is determined that the vessel P does not exist, so the operation of the inverter units 40, 41 and 42 are stopped in step 103.

Meanwhile, if the first resonance voltage V1 is detected within the predetermined time T, it is determined that the vessel P exists, so the second inverter unit 41 is operated to provide the second heating coil L2 with the second resonance voltage V2 in step 104.

After that, in step 105, the second resonance voltage V2 is detected through the second detecting unit 61. In step 106, it is determined if the vessel P exists above the second heating coil L2 based on the second resonance voltage V2. That is, if the second resonance voltage V2 is detected within the predetermined time T, it is determined that the vessel P exists. If the second resonance voltage V2 is not detected within the predetermined time T, it is determined that the vessel P does not exist, so the first inverter unit 40 is normally operated and operation of the remaining inverter units 41 and 42 is stopped in step 107.

Meanwhile, if the second resonance voltage V2 is detected within the predetermined time T, it is determined that the vessel P exists, so the third inverter unit 42 is operated to provide the third heating coil L3 with the third resonance voltage V3 in step 108.

After that, in step 109, the third resonance voltage V3 is detected through the third detecting unit 62. In step 110, it is determined if the vessel P exists above the third heating coil L3 based on the third resonance voltage V3. If the third resonance voltage V3 is not detected within the predetermined time T, it is determined that the vessel P does not exist, so the first and second inverter units 40 and 41 are normally operated and the third inverter unit 42 stops working in step 111.

Meanwhile, if the third resonance voltage V3 is detected within the predetermined time T, it is determined that the vessel P exists, so the inverter units 40, 41 and 42 are normally operated in step 112.

Although a few embodiments have been shown and described, it would be appreciated by those skilled in the art that changes may be made in these embodiments without departing from the principles and sprit of the invention, the scope of which is defined in the claims and their equivalents.

## Claims

1. An induction heating cooker comprising:
a rectifying unit rectifying input AC power into DC power;
an inverter unit providing resonance voltage by switching the DC power;
a heating coil receiving the resonance voltage and induces eddy current to a vessel such that the vessel is heated;
a detecting unit detecting the resonance voltage provided to the heating coil; and
a control unit determining if the vessel exists based on the detected resonance voltage.

2. The induction heating cooker as claimed in claim 1, wherein the control unit determines that the vessel exists if the resonance voltage is detected within a predetermined time.

3. The induction heating cooker as claimed in claim 2, wherein the control unit determines that the vessel exists if the resonance voltage is detected within the predetermined time after the inverter unit starts to operate.

4. The induction heating cooker as claimed in claim 1, wherein, upon a determination that the vessel does not exist, the control unit stops an operation of the inverter unit.

5. The induction heating cooker as claimed in claim 1, wherein, upon a determination that the vessel exists, the control unit determines if the vessel includes magnetic material or non-magnetic material based on a period of time for detecting the resonance voltage.

6. The induction heating cooker as claimed in claim 5, wherein, if the resonance voltage is detected within a first predetermined time after the inverter unit starts to operate, the control unit determines that the vessel includes the magnetic material.

7. The induction heating cooker as claimed in claim 5, wherein, if the resonance voltage is detected after a first predetermined time has lapsed from a start of operation of the inverter unit, the control unit determines that the vessel includes the non-magnetic material.

8. The induction heating cooker as claimed in claim 7, wherein, upon a determination that the vessel includes the non-magnetic material, the control unit stops an operation of the inverter.

9. The induction heating cooker as claimed in claim 7, wherein, upon a determination that the vessel includes non-magnetic material, an auxiliary resonant circuit selectively operates to apply a high radio frequency current to the heating coil.

10. An induction heating cooker comprising:
a rectifying unit rectifying input AC power into DC power;
a plurality of inverter units providing resonance voltage by switching the DC power;
a plurality of heating coils receiving the resonance voltage from the plurality of inverter units to induce an eddy current within a vessel such that the vessel is heated, the plurality of heating coils being independently disposed from each other in a concentric circle;
a plurality of detecting units detecting the resonance voltage provided to the plurality of heating coils; and
a control unit determining if the vessel heated by the heating coil exists based on the detected resonance voltage and determines a bottom size of the vessel.

11. The induction heating cooker as claimed in claim 10, wherein if the resonance voltage is detected within a predetermined time after a corresponding inverter unit starts to operate, the control unit determines that the vessel heated by the corresponding heating coil exists.

12. The induction heating cooker as claimed in claim 10, wherein the control unit stops an operation of the inverter unit which does not correspond to the bottom size of the vessel.

13. The induction heating cooker as claimed in claim 10, wherein, upon a determination that the vessel heated by the corresponding heating coil exists, if the resonance voltage is detected within a first predetermined time after the inverter unit starts to operate, the control unit determines that the vessel includes magnetic material.

14. The induction heating cooker as claimed in claim 10, wherein, upon a determination that the vessel heated by the corresponding heating coil exists, if the resonance voltage is detected after a first predetermined time has lapsed from a start of operation of the inverter unit, the control unit determines that the vessel includes non-magnetic material.

15. The induction heating cooker as claimed in claim 14, wherein, upon a determination that the vessel includes non-magnetic material, an auxiliary resonant circuit selectively operates to apply a high radio frequency current to the heating coil.
